# EUROPÄISCHE PATENTSCHRIFT

(11) **EP 2 189 685 B1**
(45) Veröffentlichungstag und Bekanntmachung des Hinweises auf die Patenterteilung: **11.01.2012**
(21) Anmeldenummer: 08020245.0
(22) Anmeldetag: 20.11.2008
(51) Int. Cl.: F16H 63/32

(54) **Schaltgabel für eine Schaltmuffe**
Shift fork for a shift collar
Fourchette d'embrayage pour un manchon d'embrayage

(43) Veröffentlichungstag der Anmeldung: 26.05.2010
(73) Patentinhaber: HOERBIGER SynchronTechnik GmbH & Co. KG, 71720 Oberstenfeld (DE)
(72) Erfinder: Tarantini, Claudio, 71706 Markgröningen (DE); Weisinger, Daniel, 71720 Oberstenfeld (DE)
(74) Vertreter: Kitzhofer, Thomas

(56) Entgegenhaltungen:
- EP-A- 1 548 335
- EP-A- 1 566 579
- JP-A- 2004 324 812

## Beschreibung

Die Erfindung betrifft eine Schaltgabel für eine Schaltmuffe gemäß dem Oberbegriff des Anspruches 1.

Eine Schaltgabel ist aus der DE 193 60 262 A1 bekannt. Der Grundköper der bekannten Schaltgabel besteht aus einem U-Profil, das eine Führungsnut aufweist, um einen Schaltmuffensteg einer Schaltmuffe umkreisen zu können. Das U-Profil des Grundkörpers ist hierbei voll tragend oder nur teilweise tragend ausgeführt.

Es ist demgegenüber Aufgabe der vorliegenden Erfindung eine Schaltgabe der im Oberbegriff des Anspruches 1 angegebenen Art zu schaffen, welches auf einfache Art und Weise ohne aufwendige Umformschritte und sich dabei ergebenden geringen Herstellungskosten reproduzierbar ist.

Die Lösung dieser Aufgabe erfolgt durch die Merkmale des Anspruches 1.

Vorteilhafterweise kann die erfindungsgemäße Schaltgabel als einfaches Blechteil ausgeführt werden. Der Schaltmuffensteg gleitet hierbei in je eine Aussparung der Gabelschenkel. Die Aussparungen können hierbei eine optimierte Kontur aufweisen, die bessere Beölung zwischen Schaltmuffe und Schaltgabe gewährleistet.

Die Unteransprüche haben vorteilhafte Weiterbildungen der Erfindung zum Inhalt.

Insbesondere durch das Vorsehen einer dritten Führung an der Schaltgabel, die beispielsweise durch einen einfachen Durchbruch und durch ein Umbiegen dieses Durchbruchs realisiert werden kann, kann ein zu starkes Verkippen der Schaltmuffe verhindert werden.

Zu den weiteren Vorteilen der erfindungsgemäßen Schaltmuffe zählen geringe Herstellungskosten, das Entfallen des Erfordernisses einer Nachbearbeitung der Teile der Schaltmuffe und das Entfallen aufwendiger Umformschritte.

Die EP 1 548 335 A2 zeigt eine Schaltgabel mit zwei U-förmig geformten Gabelschenkeln, die ausgebildet sind, um in eine Führungsnut einer Schaltmuffe einzugreifen.

Die JP 2004 324812 A zeigt eine Schaltgabel gemäß dem Oberbegriff des Anspruchs 1. Die Schaltgabel ist direkt an einer Schaltstange befestigt. Weitere Einzelheiten, Vorteile und Merkmale der vorliegenden Erfindung ergeben sich aus nachfolgender Beschreibung eines Ausführungsbeispiels anhand der Zeichnung. Es zeigt:
- Fig. 1: eine perspektivische Darstellung einer erfindungsgemäßen Schaltgabel;
- Fig. 2: eine perspektivische Darstellung der Schaltgabel gemäß Fig. 1 im an einer Schaltmuffe angeordneten Zustand;
- Fig. 3: eine vergrößerte Darstellung eines Gabelschenkels eines Teils der Schaltmuffe gemäß Fig. 2; und
- Fig. 4: eine weitere vergrößerte Darstellung eines oberen Bereichs der erfindungsgemäßen Schaltgabel und Schaltmuffe zur Erläuterung einer dritten Führungsmöglichkeit.

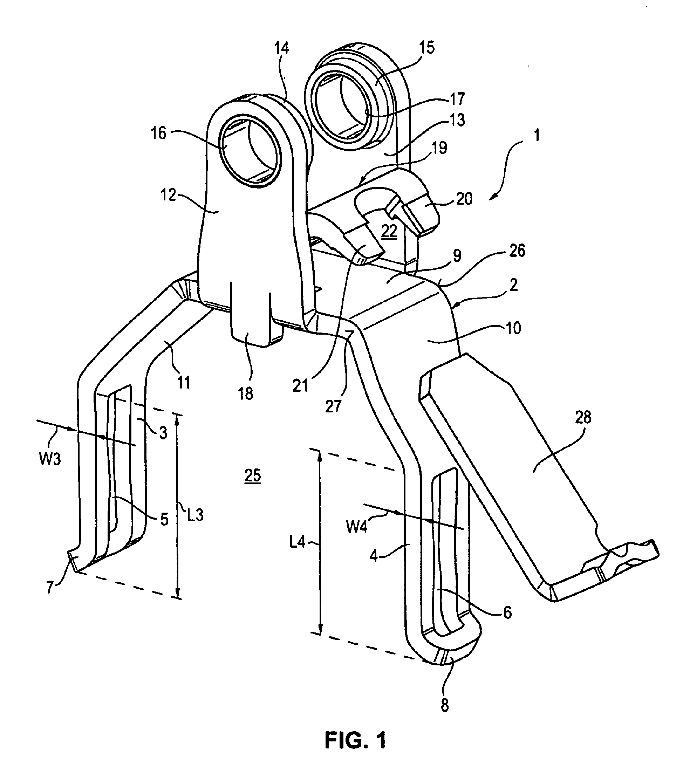

Gemäß Fig. 1 ist eine Ausführungsform einer erfindungsgemäßen Schaltgabel 1 dargestellt, die einen Grundkörper 2 umfasst. Der Grundkörper 2 weist zwei Gabelschenkel 3 und 4 auf, die an einer Grundplatte 9 des Grundkörpers 2 über abgewinkelte Verbindungsplatten 10 bzw. 11 angeordnet sind. Hieraus ergibt sich die Form eines Schaltmauls 25, die einen im Wesentlichen rechteckigen unteren Bereich und einen sich in Richtung auf die Grundplatte 9 daran anschließenden kegelstumpfförmigen Bereich umfasst.

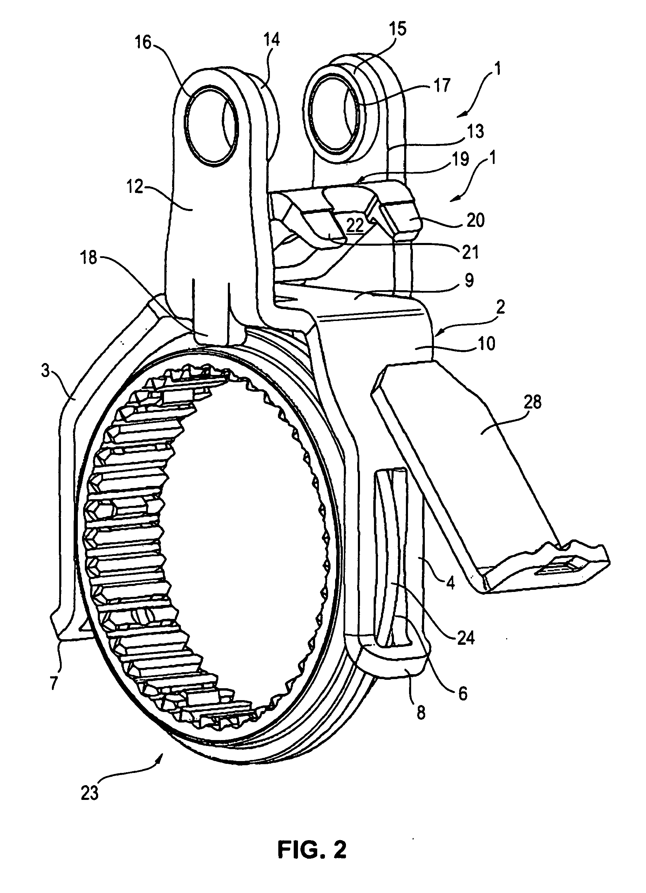

Jeder Gabelschenkel 3 und 4 weist eine zugeordnete Aussparung 5 bzw. 6 auf. Fig. 1 verdeutlicht hierbei, dass die Aussparungen 5 und 6 die jeweilige Wandstärke W₃ bzw. W₄ der Gabelschenkel 3 bzw. 4 komplett durchgreifen, so dass die Aussparungen 5 und 6 mithin Durchbrüche durch die Kabelschenkel 3 und 4 darstellen. Ferner erstrecken sich die Aussparungen 3 und 4 über nahezu die gesamte Länge L₃ bzw. L₄ der Gabelschenkel 3 und 4 und reichen jeweils in einen nach außen abgewinkelten Endbereich 7 bzw. 8. Die Aussparungen 5 und 6 sind hierbei mittig im jeweiligen Gabelschenkel 3 und 4 angeordnet und haben die Form eines Langlochs, das im dargestellten Beispielsfalle rechteckigen Querschnitt hat. Hierdurch ergibt sich eine besonders vorteilhafte Führung für eine in Fig. 2 dargestellten Schaltmuffensteg 24 einer Schaltmuffe 23 und eine bessere Beölung dieser Teile.

Wie Fig. 1 ferner verdeutlicht, sind an den Randbereichen 26 und 27 der Grundplatte 9, also beabstandet zueinander, Führungshülsenstege 12 bzw. 13 angeordnet, die mit einer Führungshülse 14 bzw. 15 versehen sind. Die Führungshülsen 14 und 15 sind wie üblich mit Gleitlagern 16 bzw. 17 versehen.

Wie Fig. 1 verdeutlicht, sind die Führungshülsenstege 12 und 13 aufrecht, vorzugsweise im rechten Winkel zur Grundplatte 9 an dieser angeordnet.

Der Führungshülsensteg 12 weist ferner eine dritte Führung in Form eines Führungssteges 18 auf. Dieser Führungssteg 18 kann als ein Durchbruch aus der Grundplatte 9 ausgebildet sein, der in die in Fig. 1 ersichtliche Ausrichtung umgebogen wird. Der Führungssteg 18 ragt hierbei von der Grundplatte 9 aus in Richtung auf das Schaltmaul 25 vor und legt sich an den Schaltmuffensteg 24 an, wie sich dies aus Fig. 2 ergibt.

Auf der Grundplatte 9 ist ferner ein Schaltarm 19 angeordnet, der in einem wählbaren Winkel zur Grundplatte 9 von dieser geneigt aufragt.

Der Schaltarm 19 weist im dargestellten Beispielsfalle zwei Schaltarmschenkel 20 und 21 auf, die eine Schaltarmausnehmung 22 begrenzen, wie sich dies im Einzelnen aus den Fig. 1 und 2 ergibt.

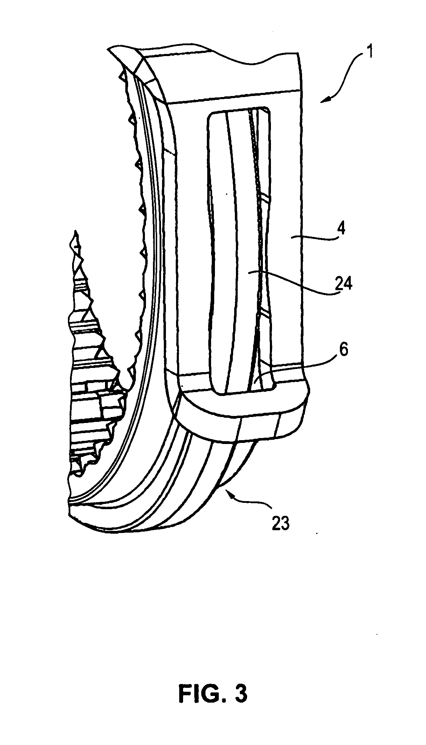

Der Eingriff des Schaltmuffensteges 24 in die Aussparung ergibt sich ferner aus der vergrößerten Darstellung der Fig. 3, in der beispielhaft der Gabelschenkel 4 mit seiner zugeordneten Aussparung 6 dargestellt ist.

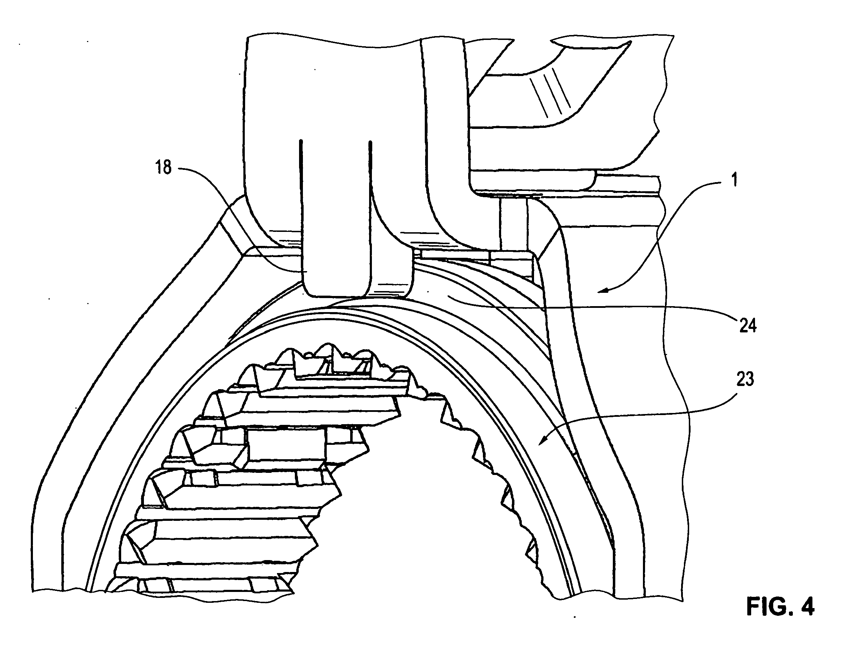

Die Führung durch den Führungssteg 18 ergibt sich ferner aus der vergrößerten Darstellung der Fig. 4.

Neben der schriftlichen Offenbarung der Erfindung wird hiermit explizit auf deren zeichnerische Darstellung in den Fig. 1 bis 4, insbesondere betreffend die geometrische Ausbildung der Teile der Schaltgabel 1, verwiesen.

### Bezugszeichenliste

- 1: Schaltgabel, insbesondere als Blechteil ausgebildet
- 2: Grundkörper
- 3, 4: Gabelschenkel
- 5, 6: Aussparung
- 7, 8: abgewinkelter Endbereich
- 9: Grundplatte
- 10, 11: abgewinkelte Verbindungsplatten
- 12, 13: Führungshülsenstege
- 14, 15: Führungshülsen
- 16, 17: Gleitlager
- 18: dritte Führung / Führungssteg
- 19: Schaltarm
- 20, 21: Schaltarmschenkel
- 22: Schaltarmausnehmung
- 23: Schiebermuffe / Schaltmuffe
- 24: Schaltmuffensteg
- 25: Schaltmaul
- 26, 27: Ränder
- 28: Schaltgabelarretierung, die dafür sorgt, dass die Schaltgabel in Neutralstellung oder im geschalteten Zustand über eine Kontur in Position gehalten wird

## Patentansprüche

1. Schaltgabel (1) für eine Schaltmuffe (23), die einen Schaltmuffensteg (24) aufweist, mit einem Grundkörper (2), der ein Schaltmaul (25) zur Aufnahme der Schaltmuffe (23) aufweist, und mit zwei Gabelschenkeln (3, 4), die das Schaltmaul (25) seitlich begrenzen und jeweils eine Aussparung (5, 6) zur Aufnahme des Schaltmuffenstegs (24) aufweisen, wobei die Gabelschenkel (3, 4) gerade ausgebildet sind und die Aussparungen (5, 6) als Durchtrittsausnehmungen ausgebildet sind, die die gesamte Wandstärke (W3 bzw. W4) der Gabelschenkel (3 bzw. 4) durchgreifen, und der Grundkörper (2) eine Grundplatte (9) aufweist, an der die Gabelschenkel (3, 4) über abgewinkelte Verbindungsplatten (10 bzw. 11) angeordnet sind,
**dadurch gekennzeichnet, dass**
an zueinander beabstandeten Randbereichen (26, 27) der Grundplatte (9) Führungshülsenstege (12, 13) angeordnet sind, die jeweils mit einer Führungshülse (14, 15) versehen sind.

2. Schaltgabel nach Anspruch 1, **dadurch gekennzeichnet, dass** die Aussparungen (5, 6) jeweils als Langloch ausgebildet sind, die jeweils über nahezu die gesamte Länge (L3, L4) der Gabelschenkel (3 bzw. 4) verlaufen.

3. Schaltgabel nach Anspruch 1 oder 2, **dadurch gekennzeichnet, dass** die Aussparungen (5, 6) mittig im jeweiligen Gabelschenkel (3 bzw. 4) angeordnet sind.

4. Schaltgabel nach einem der Ansprüche 1 bis 3, **dadurch gekennzeichnet, dass** die Gabelschenkel (3, 4) nach außen abgewinkelte Endbereiche (7 bzw. 8) aufweisen.

5. Schaltgabel nach einem der vorhergehenden Ansprüche, **dadurch gekennzeichnet, dass** an der Grundplatte (9) zumindest eine von einem Führungssteg (18) gebildete dritte Führung für den Schaltmuffensteg (24) angeordnet ist.

6. Schaltgabel nach Anspruch 5, **dadurch gekennzeichnet, dass** der Führungssteg (18) aus einem abgebogenen Durchbruch aus der Grundplatte (9) ausgebildet ist.

## Claims

1. A shift fork (1) for a shifting sleeve (23) which includes a shifting sleeve ridge (24), comprising a base body (2) which includes a shift mouth (25) to receive the shifting sleeve (23), and comprising two fork legs (3, 4) which delimit the shift mouth (25) on the sides and each include a recess (5, 6) to receive the shifting sleeve ridge (24), the fork legs (3, 4) being formed to be straight and the recesses (5, 6) being formed as passage recesses which extend through the entire wall thickness (W3 and W4, respectively) of the fork legs (3 and 4, respectively), and the base body (2) including a base plate (9) on which the fork legs (3, 4) are arranged by means of angled connecting plates (10 and 11, respectively),
**characterized in that**
guide bushing webs (12, 13) which are each provided with a guide bushing (14, 15) are arranged on edge portions (26, 27) of the base plate (9) which are spaced away from each other.

2. The shift fork according to claim 1, **characterized in that** the recesses (5, 6) are each in the form of an elongated hole and each extend over almost the entire length (L3, L4) of the fork legs (3 and 4, respectively).

3. The shift fork according to claim 1 or 2, **characterized in that** the recesses (5, 6) are arranged in the middle of the respective fork leg (3 and 4, respectively).

4. The shift fork according to any of claims 1 to 3, **characterized in that** the fork legs (3, 4) have end portions (7 and 8, respectively) angled outwards.

5. The shift fork according to any of the preceding claims, **characterized in that** at least one third guide for the shifting sleeve ridge (24) is arranged on the base plate (9) and is formed by a guide web (18).

6. The shift fork according to claim 5, **characterized in that** the guide web (18) is formed from an aperture bent out of the base plate (9).

## Revendications

1. Fourchette d'embrayage (1) pour un baladeur (23) qui présente une nervure de baladeur (24), comportant un corps de base (2) qui présente une mâchoire d'embrayage (25) destinée à recevoir le baladeur (23), et comportant deux branches de fourchette (3, 4) qui délimitent latéralement la mâchoire d'embrayage (25) et présentent chacune une échancrure (5, 6) destinée à recevoir la nervure de baladeur (24), les branches de fourchette (3,4) étant réalisées droites, et les échancrures (5, 6) étant réalisées sous forme d'évidements de passage qui traversent toute l'épaisseur de paroi (W3, W4) des branches de fourchette (3, 4) respectives, et le corps de base (2) présentant une plaque de base (9) sur laquelle les branches de fourchette (3, 4) sont agencées par l'intermédiaire de plaques de liaison (10, 11) respectives coudées,
**caractérisée en ce que**
des barres de douilles de guidage (12, 13) sont agencées à distance l'une de l'autre sur des zones de bord (26, 27) de la plaque de base (9) et sont pourvues chacune d'une douille de guidage (14, 15).

2. Fourchette d'embrayage selon la revendication 1, **caractérisée en ce que** les échancrures (5, 6) sont chacune réalisées sous forme de trous oblongs qui s'étendent chacun sur presque toute la longueur totale (L3, L4) des branches de fourchette (3, 4) respectives.

3. Fourchette d'embrayage selon la revendication 1 ou 2, **caractérisée en ce que** les évidements (5, 6) sont agencés au milieu dans la branche de fourchette (3, 4) respective.

4. Fourchette d'embrayage selon l'une des revendications 1 à 3, **caractérisée en ce que** les branches de fourchette (3, 4) présentent des zones d'extrémité (7, 8) respectives coudées vers l'extérieur.

5. Fourchette d'embrayage selon les revendications précédentes **caractérisée en ce que** sur la plaque de base (9) est agencé au moins un troisième guidage formé par une barre de guidage (18) pour la nervure de baladeur (24).

6. Fourchette d'embrayage selon la revendication 5, **caractérisée en ce que** la barre de guidage (18) est réalisée à partir d'une percée repliée hors de la plaque de base (9).
